Europäisches Patentamt

European Patent Office

Office européen des brevets

(11) Veröffentlichungsnummer: **0 496 289 A1**

## (12) EUROPÄISCHE PATENTANMELDUNG

(21) Anmeldenummer: **92100709.2**

(22) Anmeldetag: **17.01.92**

(51) Int. Cl.⁵: **F16L  55/162**

(30) Priorität: **19.01.91 DE 4101531**

(43) Veröffentlichungstag der Anmeldung:
**29.07.92 Patentblatt  92/31**

(84) Benannte Vertragsstaaten:
**CH DE FR GB LI NL**

(71) Anmelder: **IBAK HELMUT HUNGER GmbH &
CO. KG
Wehdenweg 122
W-2300 Kiel 14(DE)**

(72) Erfinder: **Hammen, Wolfgang
Rönnerweg 44
W-2300 Kiel 14(DE)**
Erfinder: **Sell, Andre
Alter Markt 3
W-2300 Kiel 1(DE)**

(74) Vertreter: **Tönnies, Jan G., Dipl.-Ing.
Niemannsweg 133
W-2300 Kiel 1(DE)**

(54) Vorrichtung zum Auffindung und Abdichten von Lecks in Rohrsystemen.

㉗ Vorrichtung zum Auffinden und Abdichten von Lecks in Rohrsystemen, insbesondere in Kanalisationsrohren (10) und an Übergangsstellen zwischen Kanalistionsrohren (10), mit einem Packer (40), der mit einer Mehrzahl von Volumen (24; 16; 26), die über Luftleitungen aufblähbar sind, und einer Einrichtung (18) zum Ausbringen eines Dichtungsmaterials versehen ist, wobei die Volumen (24; 16; 26) einen im wesentlichen sichelförmigen Querschnitt (rechtwinklig zur Längsrichtung geschnitten) besitzen, die Einrichtung (18) zum Ausbringen eines Dichtungsmaterials im Bereich wenigstens eines mittleren Volumens vorgesehen ist, wobei wiederum das oder die mittleren Volumen an diesem Ort ihren minimalen Querschnitt (entlang der Längsrichtung geschnitten) besitzen, und die Einrichtung (18) mit einem im wesentlichen mit der Außenwand des Packers (40) fluchtenden Kopf (20) versehen ist.

Fig. 5

EP 0 496 289 A1

Die Erfindung betrifft eine Vorrichtung zum Auffinden und Abdichten von Lecks in Rohrsystemen, insbesondere in Kanalisationsrohren und an Übergangsstellen zwischen Kanalistionsrohren, mit einem Packer, der mit einer Mehrzahl von Volumen, die über Luftleitungen aufblähbar ist, und einer Einrichtung zum Ausbringen eines Dichtungsmaterials versehen ist.

Eine derartige Vorrichtung ist bereits aus der EP 0 126 648 B1 bekannt, bei der zusätzlich zu einem mittleren Volumen zwei Volumina an den Enden des Packers angeordnet sind, um einen zwischen ihnen befindlichen Raum innerhalb des Rohres abzudichten, so daß ein Abdichten von Lecks im Rohr unter Zuhilfenahme des mittleren Volumens möglich ist.

Die der EP 0 126 648 B1 beschriebene Vorrichtung ist jedoch nur für einen eingeschränkten Bereich von Dichtungsmaterialien verwendbar. Vorgesehen ist die Verwendung von gelierfähigen Flüssigkeiten, die in den Raum zwischen den beiden Volumina eingebracht und durch ein evtl. Leck auch aus dem Rohr in das umgebende Erdreich gedrückt werden. Der verbleibende Rest in dem Raum zwischen den Volumina wird entweder abgepumpt, mit Reinigungsflüssigkeit fortgespült oder beim Entfernen des Packers von dem Außenmantel des Packers zur Seite gedrängt.

Die Verwendung eines Dichtungsmaterials, das in kurzer Zeit fester als gelartig aushärtet, ist mit einer solchen Vorrichtung nur möglich, wenn ein Propfen bzw. Ring innerhalb des Rohres in Kauf genommen wird, der nicht oder nur sehr aufwendig mit zusätzlichen Geräten wie z. B. Fräsen entfernt werden könnte. Ließe man das in dieser Form ausgehärtete Material im Rohr, würde dies eine Verengung im Rohr bedeuten, die meist nicht hingenommen werden kann, in jedem Fall aber nachteilig ist.

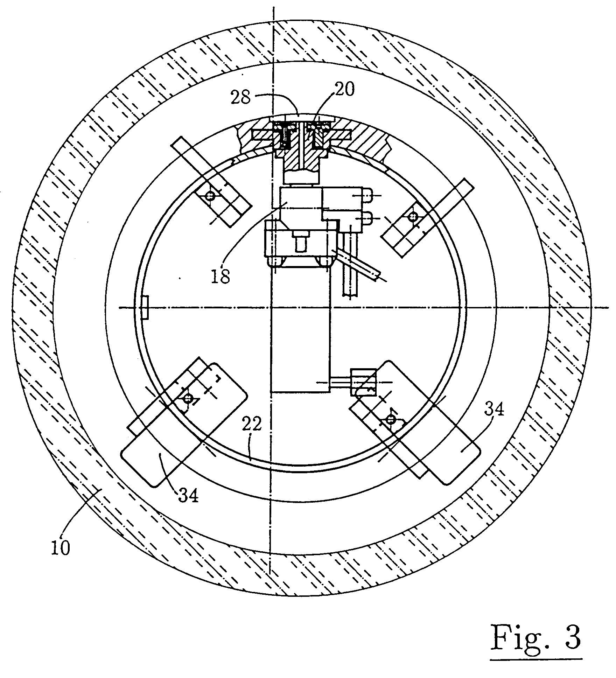

Um aber zu verhindern, daß bei solcher Praxis Dichtungsmaterial in den langen Zuleitungen ( dort z. B. Bezugszeichen 13 in Fig. 3 ) aushärtet, müßten die Leitungen einer solchen Vorrichtung nach jedem Ausbringen von Dichtungsmaterial entleert werden. Das würde im Regelfall Reinigung mit Chemikalien (mit all ihren Nachteilen wie Umweltbelastung und Kosten-, Konstruktions- und Zeitaufwand) bedeuten, denn ein einfaches Spülen mit Wasser setzte wasserlösliches und darüber hinaus umweltverträgliches Dichtungsmaterial voraus, daß aber auch dort, wo es dichtend verbleiben soll, von dem Wasser gelöst würde.

Eine Verwendung der Vorrichtung bisheriger Art ist also bei festhärtenden Dichtungsmaterialien unzweckmäßig.

Eine weitere gattungsgemäße Vorrichtung, bei der versucht wird, auch nicht gelartige Materialien zu verwenden, ist die US-PS 4 691 728, bei der ein zwischen zwei äußeren Volumina befindliches inneres Volumen aufgebläht wird und sich an die Rohrinnenwandung anlegt. Die Dichtungsmasse wird mittels Schläuchen an einen Austrittsort an der Außenwandung des aufblasbaren Volumens gebracht.

Eine solche Vorrichtung eignet sich offensichtlich nur für Dichtungsmaterialien, die auch wieder aus den Schläuchen herausgespült werden können, bevor sie aushärten. Zur Zeit geschieht dies mit einer speziellen Reinigungsflüssigkeit, z. B. Aceton. Die Verwendung einer solchen Flüssigkeit ist aus Umweltschutzgründen natürlich nicht erwünscht.

Angestrebt wird aber die Verwendung von Polyurethan-Kunststoff, der aus zwei Komponenten gemischt wird, und nach dem Mischen schnell und fest aushärtet, als Dichtungsmaterial. Keine der bisher bekannten Vorrichtungen ist aber zur Verwendung solcher Dichtungsmaterialien geeignet, wenn die vorgenannten Nachteile vermieden werden sollen.

Die Aufgabe der Erfindung war es daher, eine Vorrichtung zu schaffen, mit der ein rundum in z. B. einen Muffenspalt einzubringendes Dichtungsmaterial möglichst materialsparend einzubringen und dabei ggf. auch schnell und hart aushärtende Materialien aus zwei Komponenten verwenden zu können.

Erfindungsgemäß wird diese Aufgabe dadurch gelöst, daß die Volumen einen im wesentlichen sichelförmigen Querschnitt (rechtwinklig zur Längsrichtung geschnitten) besitzen, und die Einrichtung zum Ausbringen eines Dichtungsmaterials im Bereich wenigstens eines mittleren Volumens vorgesehen ist, wobei das oder die mittleren Volumen an diesem Ort ihren minimalen Querschnitt (entlang der Längsrichtung geschnitten) besitzen, und die Einrichtung mit einem im wesentlichen mit der Außenwand des Packers fluchtenden Kopf versehen ist.

Der besondere Vorteil einer solchen Vorrichtung ist, daß ein 2-Komponenten-Polyurethanmaterial ohne spätere Lösungsmittelreinigung und ohne Wasserzusatz direkt verwandt werden kann.

Weiter wird vorgeschlagen, daß drei Volumina in Längsrichtung des Packers vorgesehen sind, wobei die beiden äußeren Volumina torusförmig mit einem sich ändernden, jedoch einen Mindestwert nicht unterschreitenden Durchmesser ausgebildet sind, und das/die mittlere(n) Volumen ebenfalls torusförmig und mit sich ändernde Dicke (bei - anders als bei den Volumina 24, 26 - gleichbleibender Erstreckung in Längsrichtung des Packers), aber im Bereich der Einrichtung zur Ausbringung von Dichtungsmaterial endend, ausgebildet ist, so daß das/die mittlere(n) Volumen also nicht völlig umläuft und somit einen in einem Bereich offenen Torusring bildet.

Um einen Druck im Medium vor dem Austrittskopf des Dichtungsmaterials erzeugen zu können, der bewirkt, daß das Dichtungsmaterial in die Schadstelle eingetrieben wird, muß ein Raum zwischen der Rohrinnenwand und dem Außenmantel des Packers vor der Schadstelle in Längsrichtung der Rohrleitung bzw. des Packers abgedichtet werden.

Dies ist mit drei sichel- oder auch halbmondförmigen Volumina, die in Längsrichtung des Packers angeordnet sind, und von denen sich schon die beiden äußeren beim Aufblasen exzentrisch ausdehnen und im aufgeblasenen Zustand fakultativ einen größeren Umfang besitzen, am elegantesten zu lösen. Es sind jedoch auch andere Möglichkeiten des Abdichtens denkbar.

Beim Aufblasen der äußeren Volumen bereits wird sich der Packer in seiner Gesamtheit aus seiner Lage in der Mitte des Rohres auf die geplante Ausbringstelle hinzubewegen. In Fig. 5 ist dies durch die Änderung der Lage der Mittelachse des Packers aus der Position M0 in die Position M1 dargestellt. Das mittlere Volumen wird anschließend dann, wenn es aufgeblasen wird, den zwischenzeitlich unter Umständen zwischen den äußeren Volumina, der Rohrinnenwand und dem Außenmantel des Packers im mittleren Bereich gebildeten Ringraum um den Packer wieder zu Null machen und den Kopf der Einrichtung zum Ausbringen des Dichtungsmaterials besonders an die Rohrinnenwand anpressen.

Durch das verbliebene Volumen der äußeren Volumina an der Seite der Ausbringöffnung findet aber noch eine gewisse Mindestvolumenänderung beim Aufblasen der äußeren Volumina auch auf der Packerseite, an der eine Austrittsöffnung des Kopfes mündet, statt, um so für eine sichere Abdichtung des vor dem Austrittskopf befindlichen Raumes gegenüber dem umgebenden Raum zu sorgen.

Durch Entleerung des mittleren Volumens kann unabhängig von der Beschaffenheit der Rohrinnenwandung ein Raum erzeugt werden, in den Dichtungsmaterial austreten kann.

Weiterhin ist in einer Prüfphase, bei der die Vorrichtung nur auf das Vorhandensein eines Lecks prüft, eine Entleerung des mittleren Volumens separat erwünscht.

Wenn die Volumina wie vorstehend als torusförmig mit sich änderndem Durchmesser oder auch nur sich ändernder Dicke beschrieben werden, so ist nicht ein Torus mit kreisrundem Toruskörper-Querschnitt, sondern im allgemeinen ein Querschnitt mit spitz zulaufenden Kanten, wie er in Fig. 5 dargestellt (24, 16, 26) ist, gemeint.

Die beiden äußeren Volumina besitzen dabei jeweils eine sich umlaufend ändernde Erstreckung entlang der Längsachse des Packers, wie sie mit kurzen Strichen in Fig. 5 angedeutet ist, während das mittlere Volumen in dieser Längserstreckung konstant ist (angedeutet durch längere Striche in Fig. 5) und nur in seiner Dicke variiert.

Weiter wird vorgeschlagen, daß der Kopf in eine Ausnehmung im Außenmantel des Packers im Bereich, in dem das/die mittlere(n) Volumen seinen minimalen Querschnitt besitzt oder nicht vorhanden ist, mündet. Eine solche Ausnehmung erleichtert die Positionierung des Packers und Schaffung eines Volumens, in das Dichtungsmaterial hineingefüllt werden kann, erheblich. Gleichzeitig wird ein Mindestvolumen vor Schadflächen, die kein eigenes Volumen haben, erzeugt, und damit auch gleichzeitig die Überprüfung des Mediumdrucks beim Ausbringen des Dichtungsmaterials ermöglicht.

Es wird daher vorgeschlagen, daß auch eine Druckerfassungseinrichtung in die Ausnehmung mündet.

Die mit Dichtungsmaterial gefüllte Ausnehmung wird einen Positivabdruck an der Rohrinnenseite hinterlassen, wenn man den Packer wieder entfernt. Anhand dieses Positivabdruckes wird man feststellen können, daß an dieser Stelle eine Reparatur zur Abdichtung eines Lecks stattgefunden hat. Weiter wird man die benutzte Methode durch den Abdruck feststellen können. Dies ist gerade bei den sehr langen Zeiträumen, die zwischen Reparaturen von Kanalisationsrohren auftreten, wichtig.

Polyurethan nun ist ein formulierbarer (d.h. mischbarer) Werkstoff, der sehr gut an Oberflächen haftet. Es wird daher vorgeschlagen, den Außenmantel des Packers mit einer speziellen Beschichtung zu versehen. Als geeignet hat sich zum Beispiel ein Silikon gemäß der deutschen Patentanmeldung 40 15 544 erwiesen. Denkbar ist auch eine zweischichtige Ausführung des Außenmantels des Packers. Bei einer solchen Ausführung wäre die äußere Schicht aus einem Material gefertigt, von dem sich Polyurethanschaum wieder leicht lösen kann.

Abschließend wird vorgeschlagen, eine Einrichtung zum mechanischen Austreiben mittels eines Stößels von bereits gemischten 2-Komponenten-Dichtungsmaterials aus einem Mischkanal im Kopf (20) mittels eines Stößels vorzusehen. Mit einer solchen mechanischen und daher umweltfreundlichen Reinigungseinrichtung wird das Verkleben der Ausbringöffnung vermieden.

Im folgenden soll die Erfindung anhand von einer Zeichnung näher erläutert werden. Dabei zeigen:

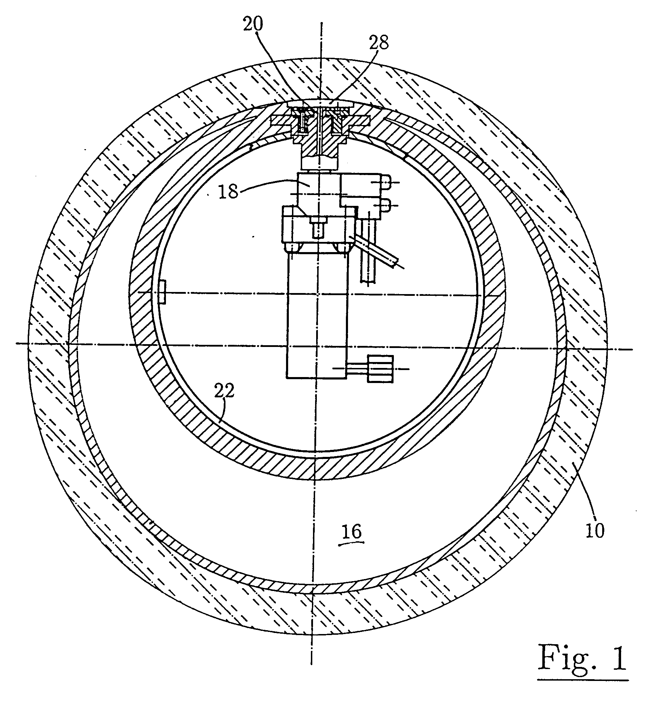

Fig. 1 einen Querschnitt der Vorrichtung in aufgeblasenem Zustand entlang der Linie A - A in Fig. 4,

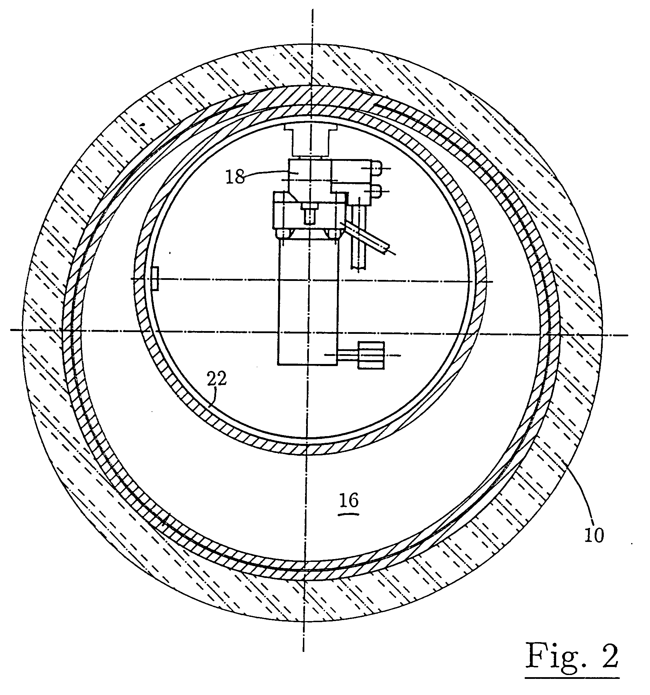

Fig. 2 einen Querschnitt der Vorrichtung in aufgeblasenem Zustand entlang der Linie B-B in Fig. 4,

Fig. 3 eine Draufsicht auf die Stirnseite der Vorrichtung in nicht-aufgeblasenem Zustand, bei der nur der Kopf im Querschnitt dargestellt ist,

Fig. 4 einen Längsschnitt der gesamten Vorrichtung entlang einer waagerechten Ebene mit nicht aufgeblasenen Volumina mit eingezeichneten Schnittlinien A - A sowie B - B für Fig. 1 und Fig. 2, wobei die unaufgeblasenen äußeren und inneren Volumina gestrichelt angedeutet sind, und

Fig. 5 einen Längsschnitt entsprechend Fig. 4 mit aufgeblasenen Volumina.

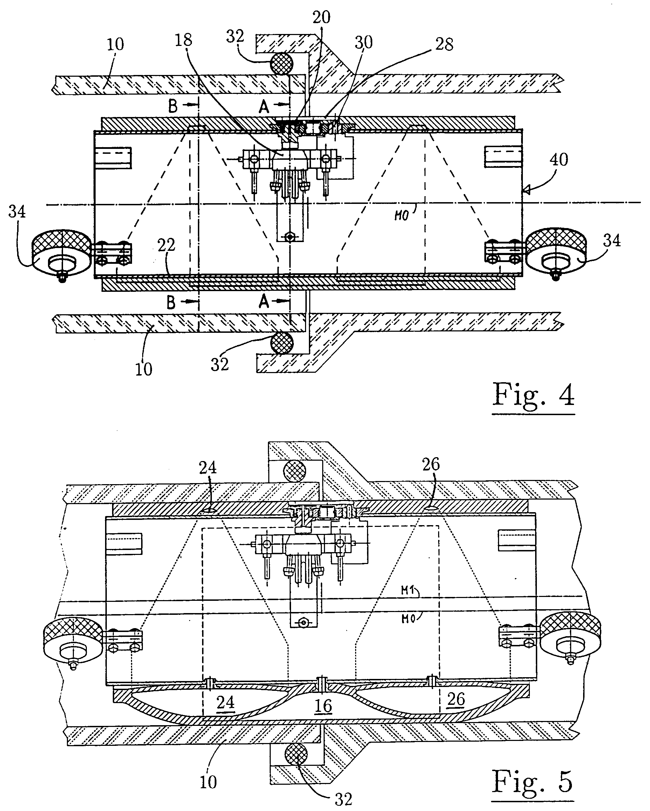

Die Vorrichtung, wie sie in Fig. 4 dargestellt ist, besteht aus einem Packer 40, der auf Rollen 34 in einem Rohr 10 fortbewegt werden kann. Der Packer 40 weist in seinem Inneren eine Einrichtung 18 zum Ausbringen von Dichtungsmaterial auf, und besitzt einen ihn umgebenden Mantel, in dem drei aufblasbare sichelförmige Volumina 24, 16, 26 vorgesehen sind.

Beim Legen von Kanalisationsrohren 10, die üblicherweise an der einen Seite ein aufgeweitetes Ende, eine sogenannte Glocke, und auf der anderen Seite eine Spitze besitzen, wird darauf geachtet, daß beim Verlegen jeweils ein Ringmuffenspalt, d. h. ein geringer Längsabstand zwischen aufeinanderfolgenden Rohren gewahrt bleibt. Sonst würden schon geringste Erdbewegungen und Längenänderungen, z. B. durch Erwärmung, zu Absplitterungen an den Rohrenden führen. In dem Ringmuffenspalt wird an die Spitze des inneren Rohrs außen anliegend und innen an die Glocke des äußeren Rohres anliegend eine Ringdichtung 32 vorgesehen.

Solche Ringdichtungen 32 ermüden mit der Zeit, und daher sind die meisten zu reparierenden Lecks in Kanalisationsleitungen auf Defekte solcher Dichtungen zurückzuführen.

Zur Reparatur eines Lecks wird man den Packer 40 zuerst an die gewünschte Stelle im Rohr 10 manövrieren, indem man mit einer Fernsehkamera, die einen definierten Blickwinkel besitzt, über die Außenmanschetten des Packers 40 die vermutete Leckstelle anpeilt. Danach wird sich die Leckstelle zwischen den beiden äußeren Volumina 24, 26 befinden.

Anschließend kann durch Aufblasen der beiden äußeren Volumina 24, 26 und darauf anschließendes Druckprüfen des zwischen ihnen verbleibenden, nun gegen den Rest des Innenraumes des Rohres 10 abgesiegelten Raums festgestellt werden, ob an der angepeilten Stelle tatsächlich ein Leck ist.

Dazu wird der Raum mit einem erhöhten Druck beaufschlagt, indem man ein Medium, vorzugsweise Luft, einbringt und mit Hilfe der Druckerfassungseinrichtung 30 den Druck mißt. Später kann auf die gleiche Weise der Druck des Dichtungsmediums mit dieser Druckerfassungseinrichtung 30 geprüft werden.

Beim Einbringen von Dichtungsmaterial in den Ringmuffenspalt wird sich dieses durch den Druck, mit dem es austritt, in dem gesamten Spalt, d.h. einmal um den Packer herum, ausbreiten. Insbesondere wird es zur Leckstelle fließen, da dort ein Druckabfall stattfindet.

Ähnliches gilt auch für Leckstellen in den Mittelabschnitten von Rohren. Da der von den beiden äußeren Volumina 24, 26 abgedichtete Raum sich einmal rund um den Packer erstreckt, wird eine Leckstelle unabhängig von ihrer radialen Lage abgedichtet. Eine Verdrehbarkeit des Kopfes 20 um die Längsachse des Packers herum, um sowohl obenliegende wie unten oder an den Seiten liegende Leckstellen mit Dichtungsmaterial zu beaufschlagen, ist daher nicht nötig, jedoch denkbar.

Nachdem die ausgetretene Dichtungsmasse innerhalb kurzer Zeit fest geworden ist, kann der Packer 40 herausgefahren werden. Es wird nur eine dünne Schicht mit ggf. einer siegelartigen erhabenen stärkeren Stelle von der Ausnehmung 28 direkt an der Innenwandung des Rohres verbleiben, wobei die stärkere Stelle auf der Schadstelle bzw. auf dem Ringmuffenspalt zwischen zwei Kanalisationsrohren sitzt. Der Positivabdruck der Ausnehmung kann später eine einfache Bestimmung des zur Abdichtung verwandten Verfahrens und der genauen Position des Packers dabei ermöglichen.

Der Außenmantel des Packers wird vorzugsweise mit einer die Haftung verhindernden Beschichtung versehen. Als geeignet hat sich ein Silicon entsprechend der deutschen Patentanmeldung 40 15 544 erwiesen.

Die Volumina überlappen sich bei der vorgeschlagenen Vorrichtung in Längsrichtung schräg. Dies hat den Vorteil, daß sich im aufgeblasenen Zustand eine zylindrische Form einstellt und nicht wegen der sich andersartig dehnenden Wände der Volumina eine Form mit drei umlaufenden Beulen. Man könnte diese Ausdehnung zwar schon vorher bei der Formgebung der Volumina entsprechend korrigieren, diese also auf den aufgeblasenen Zustand hin formen, dann gäbe es jedoch Probleme mit der Form im nicht oder teilaufgeblasenen Zustand, bzw. dann, wenn nicht alle Volumina gleichzeitig aufgeblasen werden.

Beim Aufblasen der äußeren Volumen 24, 26 bereits wird sich der Packer 40 in seiner Gesamtheit aus seiner Lage in der Mitte des Rohres auf die geplante Ausbringstelle hinbewegen. In Fig. 5 ist dies durch die Änderung der Lage der Mittelachse des Packers aus der Position M0 in die Position M1 dargestellt. Das mittlere Volumen 16 wird anschließend dann, wenn es aufgeblasen wird, den zwischenzeitlich unter Umständen zwischen den äußeren Volumina, der Rohrinnenwand und dem Außenmantel des Packers im mittleren Bereich gebildeten Ringraum um den Packer wieder zu Null machen und den Kopf 20 der Einrichtung 18 zum Ausbringen des Dichtungsmaterials besonders an die Rohrinnenwand anpressen.

Nach dem Ausbringen des Dichtungsmaterials kann mit einem Stößel der Teil des Kopfes, in dem sich bereits gemischtes, ausgehärtetes Dichtungsmaterial befindet, geleert werden.

## Patentansprüche

1. Vorrichtung zum Auffinden und Abdichten von Lecks in Rohrsystemen, insbesondere in Kanalisationsrohren (10) und an Übergangsstellen zwischen Kanalistionsrohren (10), mit einem Packer (40), der mit einer Mehrzahl von Volumen (24; 16; 26), die über Luftleitungen aufblähbar sind, und einer Einrichtung (18) zum Ausbringen eines Dichtungsmaterials versehen ist,

   dadurch gekennzeichnet, daß
   - die Volumen (24; 16; 26) einen im wesentlichen sichelförmigen Querschnitt (rechtwinklig zur Längsrichtung geschnitten) besitzen,
   - die Einrichtung (18) zum Ausbringen eines Dichtungsmaterials im Bereich wenigstens eines mittleren Volumens vorgesehen ist, wobei das oder die mittleren Volumen an diesem Ort ihren minimalen Querschnitt (entlang der Längsrichtung geschnitten) besitzen, und
   - die Einrichtung (18) mit einem im wesentlichen mit der Außenwand des Packers (40) fluchtenden Kopf (20) versehen ist.

2. Vorrichtung nach Anspruch 1, dadurch gekennzeichnet, daß drei Volumina (24, 16, 26) in Längsrichtung des Packers (40) vorgesehen sind, wobei die beiden äußeren Volumina (24, 26) torusförmig mit einem sich ändernden, jedoch einen Mindestwert nicht unterschreitenden Durchmesser ausgebildet sind, und das/die mittlere(n) Volumen (16) ebenfalls torusförmig und mit sich ändernder Dicke ( bei - anders als bei den Volumina (24, 26) - gleichbleibender Erstreckung in Längsrichtung des Packers (40) ), aber im Bereich der Einrichtung (18) endend, ausgebildet ist, so daß das/die mittlere(n) Volumen also nicht völlig umläuft und somit einen in einem Bereich offenen Torusring bildet.

3. Vorrichtung nach einem der vorangehenden Ansprüche, dadurch gekennzeichnet, daß der Kopf (20) in eine Ausnehmung (28) im Außenmantel des Packers (40) in dem Bereich, in dem das/die mittlere(n) Volumen seinen minimalen Querschnitt besitzt oder nicht vorhanden ist, mündet.

4. Vorrichtung nach einem der vorangehenden Ansprüche, dadurch gekennzeichnet, daß eine Druckerfassungseinrichtung (30) in die Ausnehmung (28) mündet.

5. Vorrichtung nach einem der vorangehenden Ansprüche, dadurch gekennzeichnet, daß der Außenmantel des Packers (40) mit einer äußeren Beschichtung versehen ist.

6. Vorrichtung nach einem der vorangehenden Ansprüche, gekennzeichnet durch eine Einrichtung zum mechanischen Austreiben von bereits gemischten 2-Komponenten-Dichtungsmaterials aus einem Mischkanal im Kopf (20) mittels eines Stößels.

Fig. 1

Fig. 2

Fig. 3

Fig. 4

Fig. 5

Europäisches Patentamt

# EUROPÄISCHER RECHERCHENBERICHT

Nummer der Anmeldung

EP    92 10 0709

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-3 810 615 (HANS BROCHIER GMBH & CO.) * Zusammenfassung; Abbildungen * --- | 1 | F16L55/162 |
| A,D | EP-A-0 126 648 (BRITISH GAS CORP.) * Zusammenfassung; Abbildungen * --- | 1 | |
| A | DE-U-8 910 356 (MÜLLER UMWELTTECHNIK GMBH & CO. KG) * Abbildungen * ----- | 1 | |
| | | | **RECHERCHIERTE SACHGEBIETE (Int. Cl.5 )** |
| | | | F16L |

Der vorliegende Recherchenbericht wurde für alle Patentansprüche erstellt

| Recherchenort | Abschlußdatum der Recherche | Prüfer |
|---|---|---|
| DEN HAAG | 24 APRIL 1992 | Andreas Bartsch |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus andern Gründen angeführtes Dokument
....................................................................
& : Mitglied der gleichen Patentfamilie, übereinstimmendes
  Dokument

EPO FORM 1503 03.82 (P0403)